# EUROPEAN PATENT APPLICATION

(11) **EP 4 807 530 A1**
(43) Date of publication of application: **16.09.2026**
(21) Application number: 25226112.8
(22) Date of filing: 21.12.2025
(51) Int. Cl.: G06F 8/41, G06F 8/75, G06F 11/3604

(54) **SYSTEM AND METHOD FOR ASSESSING THE AGILITY OF AN ENTERPRISE APPLICATION**

(30) Priority: 12.03.2025 IN 202521022284
(71) Applicant: Tata Consultancy Services Limited, Mumbai, Maharashtra 400 021 (IN)
(72) Inventor: VIDHANI, Kumar Mansukhlal, 382009 Gandhinagar (IN); BHOWMICK, Amit, 560066 Bangalore (IN); BHATTACHAR, Rajan Mindigal Alasingara, 560066 Bangalore (IN)
(74) Representative: Goddar, Heinz J.

(57) **Abstract**

Exiting systems fail to provide an automatic way of assessing the application with respect to crypto agility. The present disclosure performs the following steps iteratively, till the length of a call hierarchy corresponding to one or more interfaces of one or more crypto Application Programming Interfaces (APIs). A crypto inventory report is generated using a first set of inventory rules. The one or more clusters of one or more crypto APIs are generated based on a membership of one or more crypto API parameters of a class determined by a slicer. The one or more interfaces are extracted from the one or more clusters of the one or more crypto APIs. The extracted one or more interfaces are converted into a second set of inventory rules and a crypto inventory report is generated. An agility score of the application is then calculated accordingly.

## Description

### CROSS-REFERENCE TO RELATED APPLICATIONS AND PRIORITY

The present application claims priority to Indian application no. 202521022284, filed on March 12, 2025.

### TECHNICAL FIELD

The disclosure herein generally relates to crypto agility assessment, and, more particularly, to a system and method for assessing the agility of an enterprise application.

### BACKGROUND

Crypto agility is a discipline of cryptography that is defined as an enterprise's ability to change its Information Technology (IT) artifacts such as applications, protocols, devices, etc. without disrupting existing infrastructure. Enterprise must change a cryptography artifact if a vulnerability is discovered in a cryptography algorithm which is implemented by the artifact.

Advancement in quantum computing makes all cryptography artifacts and in particular asymmetric crypto artifacts vulnerable to quantum attacks due to their huge computing power. Therefore, any enterprise application which uses vulnerable crypto artifacts needs to be replaced with quantum safe crypto artifacts. In the future, proposed quantum safe crypto artifacts may become vulnerable again as the field advances. Hence, there is a need to first make and then keep the application crypto agile with respect to its crypto operations.

The decision of whether the application should be made crypto agile or not, taken easily if it is evaluated with respect to the crypto agility property. A contemporary state of application which tells us whether the application is amenable to the crypto agile state or not. In nutshell, the assessment of application with respect to crypto agility is an important activity and will help enterprise to make the right decision before converting it to crypto agile state.

### SUMMARY

Embodiments of the present disclosure present technological improvements as solutions to one or more of the above-mentioned technical problems recognized by the inventors in conventional systems. For example, in one embodiment, a method for assessing the agility of an enterprise application is provided. The method includes receiving, via one or more hardware processors, by an inventory generator, an application containing one or more crypto Application Programming Interfaces (APIs) and a first set of inventory rules; performing iteratively, via the one or more hardware processors, till the length of a call hierarchy corresponding to one or more interfaces of the one or more crypto Application Programming Interfaces (APIs), wherein the one or more interfaces is defined as the application method that invokes the one or more crypto APIs: generating a crypto inventory report using the received first set of inventory rules; generating, by a clustering engine, one or more clusters of the one or more crypto APIs comprised in the generated crypto inventory report, based on a membership of one or more crypto API parameters of a class determined by a slicer; extracting, by a rule generator, the one or more interfaces from the one or more clusters of the one or more crypto APIs, to determine the usage of one or more crypto operations; converting the extracted one or more interfaces into a second set of inventory rules; and generating a new crypto inventory report using the converted second set of inventory rules; and calculating, via the one or more hardware processors, an agility score of the application by converting the newly generated crypto inventory report into one or more nodes of at least one of a tree structure or a forest structure based on a number of the one or more clusters generated.

In another aspect, there is provided a system for assessing the agility of an enterprise application. The system comprises: a memory storing instructions; one or more communication interfaces; and one or more hardware processors coupled to the memory via the one or more communication interfaces, wherein the one or more hardware processors are configured by the instructions to: receive, by an inventory generator, an application containing one or more crypto Application Programming Interfaces (APIs) and a first set of inventory rules. The system further includes performing iteratively, till the length of a call hierarchy corresponding to one or more interfaces of the one or more crypto Application Programming Interfaces (APIs), wherein the one or more interfaces is defined as the application method that invokes the one or more crypto APIs: generating a crypto inventory report using the received first set of inventory rules; generating, by a clustering engine, one or more clusters of the one or more crypto APIs comprised in the generated crypto inventory report, based on a membership of one or more crypto API parameters of a class determined by a slicer; extracting, by a rule generator, the one or more interfaces from the one or more clusters of the one or more crypto APIs, to determine the usage of one or more crypto operations; converting the extracted one or more interfaces into a second set of inventory rules; and generating a new crypto inventory report using the converted second set of inventory rules; and calculating an agility score of the application by converting the newly generated crypto inventory report into one or more nodes of at least one of a tree structure or a forest structure based on a number of the one or more clusters generated.

In yet another aspect, there are provided one or more non-transitory machine-readable information storage mediums comprising one or more instructions which when executed by one or more hardware processors cause receiving, by an inventory generator, an application containing one or more crypto Application Programming Interfaces (APIs) and a first set of inventory rules; performing iteratively, till the length of a call hierarchy corresponding to one or more interfaces of the one or more crypto Application Programming Interfaces (APIs), wherein the one or more interfaces is defined as the application method that invokes the one or more crypto APIs: generating a crypto inventory report using the received first set of inventory rules; generating, by a clustering engine, one or more clusters of the one or more crypto APIs comprised in the generated crypto inventory report, based on a membership of one or more crypto API parameters of a class determined by a slicer; extracting, by a rule generator, the one or more interfaces from the one or more clusters of the one or more crypto APIs, to determine the usage of one or more crypto operations; converting the extracted one or more interfaces into a second set of inventory rules; and generating a new crypto inventory report using the converted second set of inventory rules; and calculating an agility score of the application by converting the newly generated crypto inventory report into one or more nodes of at least one of a tree structure or a forest structure based on a number of the one or more clusters generated.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for assessing the agility of an enterprise application, according to some embodiments of the present disclosure.
FIG. 2 is a functional block diagram of the system for assessing the agility of an enterprise application, according to some embodiments of the present disclosure.
FIGS. 3A and 3B are flow diagrams illustrating the steps involved in the method for assessing the agility of an enterprise application, according to some embodiments of the present disclosure.
FIG. 4 illustrates a use case for creation of a crypto inventory report to one or more clusters - single membership case, in conjunction with the method for assessing the agility of an enterprise application, according to some embodiments of the present disclosure.
FIG. 5 illustrates a use case for creation of the crypto inventory report to the one or more clusters - multiple membership case, in conjunction with the method for assessing the agility of an enterprise application, according to some embodiments of the present disclosure.
FIG. 6 illustrates an iterative process to determine the usage of one or more crypto operations, in conjunction with the method for assessing the agility of an enterprise application, according to some embodiments of the present disclosure.
FIG. 7 illustrates a conversion of the crypto inventory report into inventory rules, in conjunction with the method for assessing the agility of an enterprise application, according to some embodiments of the present disclosure.
FIGS. 8A through 8C illustrate one or more structures created by a multi-iterative inventory and a clustering process, in conjunction with the method for assessing the agility of an enterprise application, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Crypto agility, the ability of a system to migrate from one cryptography standard to another without re-implementing the system is heterogenous property. The migration of protocols like Transport Layer Security (TLS) (known in the art) from one cryptography standard to another will be different than the migration of cryptography certificate (known in the art). Therefore, in literature different solutions are proposed to enable crypto agility for different types of software artifacts. For enterprise applications, the recommendation is to decouple cryptography code from the rest of the application. Moreover, to implement the crypto agility at the enterprise level, a combination of global and local cryptography policies is suggested (as known in the art).

One of the existing works enables crypto agility through a proxy server and crypto agility system that maintains a suite of cryptography algorithms. Proxy server can initiate communication with endpoint on behalf of legacy application or service which does not support the latest cryptography algorithms. Crypto agility system has a repository of cryptography algorithms and provide services to proxy server (known in the art).

Another existing work, CARAF (Crypto Agility Risk Assessment Framework) provides crypto agility risk assessment framework for an enterprise to assess the risks with respect to quantum threats. CARAF recommends a 5 phases approach to identify and mitigate risks. As per the framework, enterprise assets which are less crypto agile will face higher cost of migration.

One another existing work, Crypto Agility Maturity Model (CAMM) assesses software or Information Technology (IT) landscape with respect to crypto agility. CAMM consists of five levels. There are a set of requirements for every level. CAMM is mainly manual approach to assess the state of crypto agility (as known in the art). The solutions provided in literature either enable crypto agility in protocols, legacy application, assess the impact in hardware or provide manual solutions to assess the state of crypto agility.

The present disclosure addresses the above mentioned issues by assessing the agility of an enterprise application. The present disclosure performs the following steps iteratively, till the length of a call hierarchy corresponding to one or more interfaces of one or more crypto Application Programming Interfaces (APIs). The one or more interfaces to the one or more crypto Application Programming Interfaces (APIs) is defined as the application method that invokes the one or more crypto Application Programming Interfaces (APIs). A crypto inventory report is generated using a first set of inventory rules. The one or more clusters of the APIs comprised in the generated crypto inventory report are generated based on a membership of one or more crypto API parameters of a class determined by a slicer. The one or more interfaces are extracted from the one or more clusters of the one or more crypto APIs, to determine the usage of one or more crypto operations. The extracted one or more interfaces are converted into a second set of inventory rules. A crypto inventory report is generated using the converted second set of inventory rules. An agility score of the application is calculated by converting the generated crypto inventory report into one or more nodes of at least one of a tree structure or a forest structure based on a number of the one or more clusters generated.

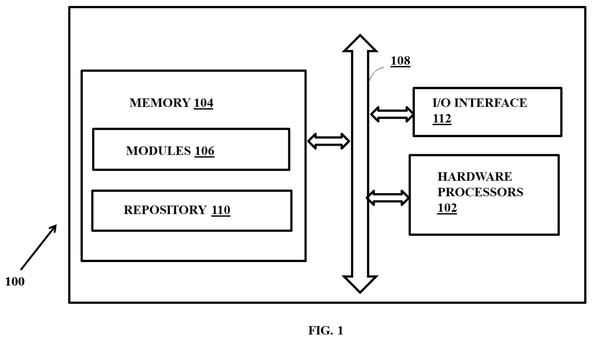

Referring now to the drawings, and more particularly to FIG. 1 through FIG.8C, where similar reference characters denote corresponding features consistently throughout the figures, there are shown preferred embodiments, and these embodiments are described in the context of the following exemplary system and/or method.

FIG. 1 illustrates an exemplary system 100 for assessing the agility of an enterprise application, according to some embodiments of the present disclosure. In an embodiment, the system 100 includes or is otherwise in communication with hardware processors 102, at least one memory such as a memory 104, and an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For this purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106. The memory 104 also includes a data repository (or repository) 110 for storing data processed, received, and generated by the plurality of modules 106.

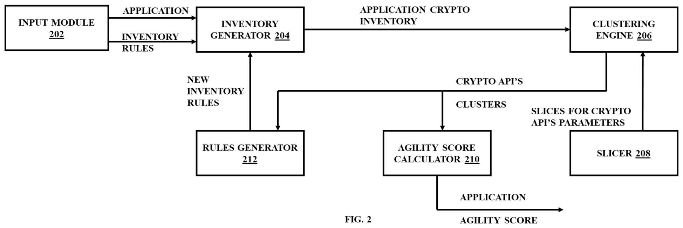

The plurality of modules 106 includes programs or coded instructions that supplement applications or functions performed by the system 100 for assessing agility of an enterprise application. The plurality of modules 106, amongst other things, can include routines, programs, objects, components, and data structures, which perform particular tasks or implement particular abstract data types. The plurality of modules 106 may also be used as signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for assessing the agility of an enterprise application. In an embodiment, the modules 106 includes an input module 202, an inventory generator 204, a clustering engine 206, a slicer 208, an agility score calculator 210 and a rules generator 212. The modules are depicted in FIG. 2. These modules that are depicted in FIG. 2 are implemented as at least one of a logically self-contained part of a software program, a self-contained hardware component, and/or a self-contained hardware component with a logically self-contained part of a software program embedded into each of the hardware component that when executed perform the above method described herein, in one embodiment of the present disclosure.

The data repository (or repository) 110 may include a plurality of abstracted pieces of code for refinement and data that is processed, received, or generated as a result of the execution of the module(s) 106.

Although the data repository 110 is shown internal to the system 100, it will be noted that, in alternate embodiments, the data repository 110 can also be implemented externally to the system 100. The data contained within such an external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS).

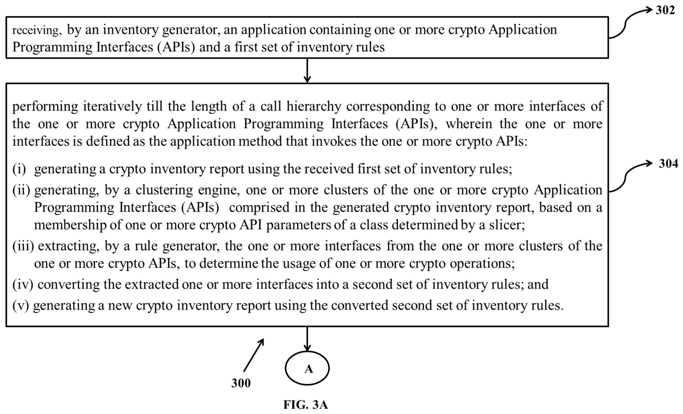

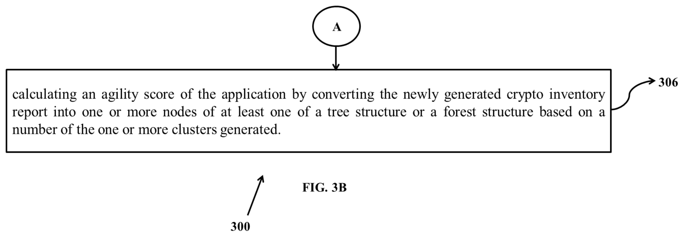

FIGS. 3A and 3B are flow diagrams illustrating a method for assessing the agility of an enterprise application using the systems 100 of FIGS. 1-2, according to some embodiments of the present disclosure. Steps of the method of FIGS. 3A and 3B shall be described in conjunction with the components of FIG. 2. At step 302 of the method 300, the input module 202 and the inventory generator 204 executed via the one or more hardware processors 102 receive an application and a first set of inventory rules.

At step 304 of the method 300, the inventory generator 204, the clustering engine 206, the slicer 208 and the rules generator 212 executed via the one or more hardware processors 102 perform the following steps iteratively, till the length of a call hierarchy corresponding to one or more interfaces of one or more crypto Application Programming Interfaces (APIs). The one or more interfaces is defined as the application method that invokes the one or more crypto Application Programming Interfaces (APIs). A crypto inventory report is generated using the received first set inventory rules. The one or more clusters of the one or more crypto Application Programming Interfaces (APIs) comprised in the generated crypto inventory report are generated based on a membership of one or more crypto API parameters of a class determined by a slicer. The one or more interfaces are extracted from the one or more clusters of the one or more crypto APIs, to determine the usage of one or more crypto operations. The extracted one or more interfaces are converted into a second set of inventory rules. A new crypto inventory report is generated using the converted second set of inventory rules.

The inventory generator 204 takes application and the first set of inventory rules as inputs and generates the crypto inventory report.
Example of Inventory rule:

```
 {
 id: "CipherDFRule",
 methodName: "doFinal",
 className: "Cipher"
 }
```

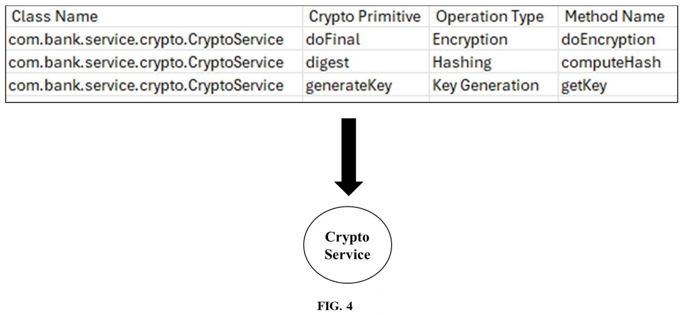

The inventory generator 204 consists of a list of crypto Application Programming Interfaces (APIs) invocations along with locations (i.e., line number, class or file name), a type of operation (e.g., encryption) and the severity of crypto API (e.g., high). The inventory generator 204 operates on either source or binary form of application. The inventory generator 204 uses a pattern matching approach (known in the art) to produce the crypto inventory report. FIG. 4 depicts an exemplary crypto inventory report in the tabular form.

The clustering engine 206 takes the output of the inventory generator 204 (which is the crypto inventory report of the input application) as input and produces one or more clusters. The clustering engine 206 clusters the one or more crypto APIs of the crypto inventory report based on their membership. The Crypto Agility Assessor (CAA) defines the membership of a crypto API as an occurrence of invocation in a class or file.

Each of the one or more crypto APIs either takes a set of parameters as arguments or uses initialization parameters to perform the required crypto operation. Examples of the set of parameters include a key length, an algorithm name and the like. In either case, these parameters must be initialized with secure values as per security standard. This initialization can happen in a different class/file in input application. The clustering engine 206 relies on the slicer 208 to get program statements which initialize the parameters. Based on membership of such program statements, the clustering engine 206 further attaches child clusters to the crypto API invocation cluster.

The slicer 208 computes program slices based on a slicing criterion. The slicer 208 is used by the clustering engine 206 to determine the membership of crypto API parameters. The slicer 208 processes input application and generates the System Dependence Graph (SDG) which is pre-requisite for computing a program slice. The slicer 208 receives a slicing criterion from the clustering engine 206 and uses it to compute a backward slice for the criterion. Since the clustering engine 208 requires the membership of slicing criterion, which is a crypto API parameter, its initialization may happen in a class other than crypto API invocation. For every slicing criterion, the slicer 208 computes and returns a program slice which is further processed by the clustering engine 206 to extract the membership of crypto API parameter.

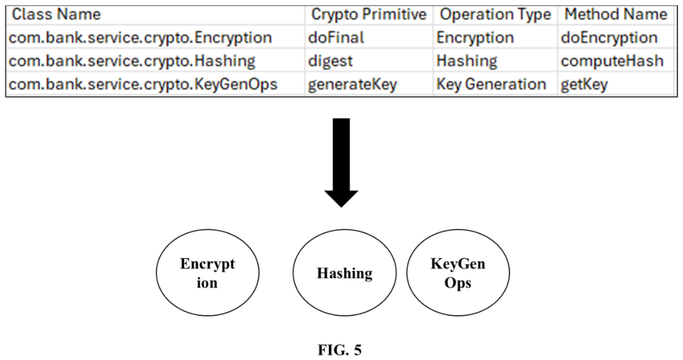

The clustering engine 206 produces one or more clusters post processing of the crypto inventory report. If the number of clusters are less than threshold value "cc" then, application has all crypto operations localized. However, this does not give any information about how these crypto operations are used throughout the application. Therefore, it is necessary to extract interfaces to crypto APIs which are used by other components of application. An interface to a crypto API is defined as an application method that invokes the crypto API. As shown in FIG.5, "doEncryption" method of application is an interface for "doFinal" crypto API.

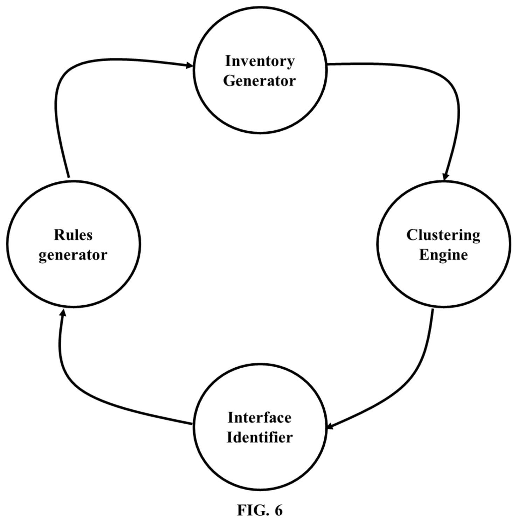

To extract the usage of crypto operations in application, the rules generator 212 extracts interfaces for crypto operations. These interfaces are converted into the second set of inventory rules. The crypto inventory report contains the interfaces after first iterations and all subsequent iterations. These inventory rules serve as input to the inventory generator 204. The inventory generator 204 uses them to generate a new inventory report. This iterative process is shown in FIG.6.

At step 306 of the method 300, the agility score calculator 210 executed via the one or more hardware processors 102 calculates an agility score of the application by converting the newly generated crypto inventory report into one or more nodes of at least one of a tree structure or a forest structure based on a number of the one or more clusters generated.

To calculate the agility score for the input application, each iteration (as shown in FIG.6) is converted into one or more nodes of at least one of the tree structure or the forest structure depending on the number of clusters. Every cluster computed by the clustering engine 206 in the first iteration is marked as one or more root nodes. In the *i^{th}* iteration, post calculation of clusters, the number of nodes will be created as per the number of clusters determined by clustering engine and attached as children to (*i -* 1) level node. This process leads to either a tree structure or a forest structure depending on the number of clusters created in first iteration. If a single cluster is created then, the subsequent iterations lead to the tree structure. Otherwise, the forest structure will be generated.

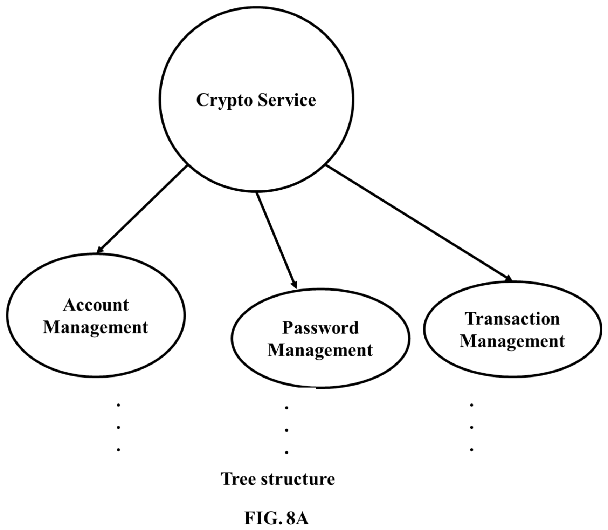

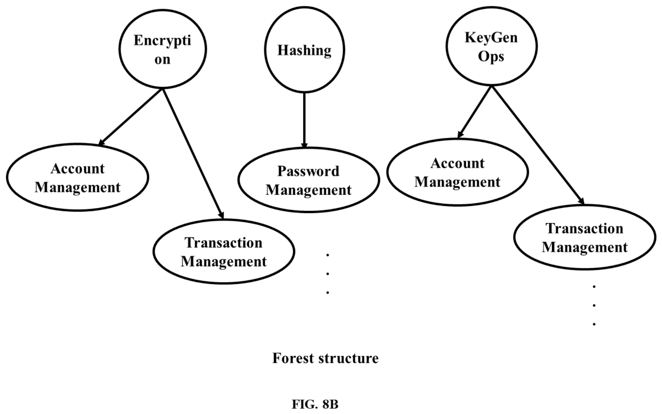

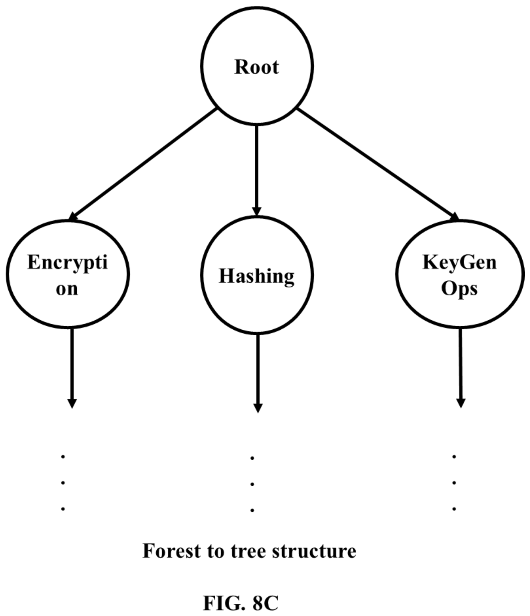

The multi-iteration process generates tree structure, for the example of FIG.4 as shown in FIG. 8A. While the forest structure is generated for FIG.5 example as shown in FIG. 8B. In order to compute crypto agility score for input application, the multi-iterative inventory and clustering process should create a uniform structure. Therefore, if the process creates the forest structure, then, it is converted into the tree structure by creating a new node and linking all trees of the forest structure to that node. The new node becomes a root node as shown in FIG. 8C. Once the conversion process is over, the agility score calculator 210 computes agility score for the input application.

The agility score calculator 210 processes the tree from top (root node) to bottom (leaf nodes). At every level starting from the root node, it assigns a number 2^*i* to a node where *i* is the level or distance of node from root node (the root node is assigned *i* = 1). As an example, agility calculator will assign value 2^1 = 2 to "Crypto Service" node and 2^2 = 4 value to "AccountManagement", "PasswordManagement" and "TransactionManagement" nodes (as shown in FIG. 8A). Once these values are assigned, the agility score calculator 210 computes product of values of nodes at a given level. For example, at level 2, if there are m nodes then, the value of product will be (m * 4). Finally, it adds product values across all levels. This will be the final agility score of input application. Applying this to FIG. 8A and assuming it has only two levels then, the agility score will be 2 + 64 = 66.

FIG. 4 illustrates a use case for creation of a crypto inventory report to one or more clusters - single membership case, in conjunction with the method for assessing the agility of an enterprise application, according to some embodiments of the present disclosure. As shown in FIG.4, all crypto APIs which are shown under "Crypto Primitive" head are occurring in a single class "com.bank.service.crypto.CryptoService". Therefore, all the crypto APIs are clustered under a single cluster which is "Crypto Service".

FIG. 5 illustrates a use case for creation of the crypto inventory report to the one or more clusters - multiple membership case, in conjunction with the method for assessing the agility of an enterprise application, according to some embodiments of the present disclosure. Different crypto APIs of application are invoked in different classes. As shown in FIG.5, the "doFinal" crypto API is invoked in "com.bank.service.crypto.Encryption" class while "generateKey" API is invoked in "com.bank.service.crypto.KeyGenOps" class. The clustering engine creates three clusters for the inventory report of FIG. 5.

FIG. 6 illustrates an iterative process to determine the usage of one or more crypto operations, in conjunction with the method for assessing the agility of an enterprise application, according to some embodiments of the present disclosure. The details of the iterative process are explained in previous sections.

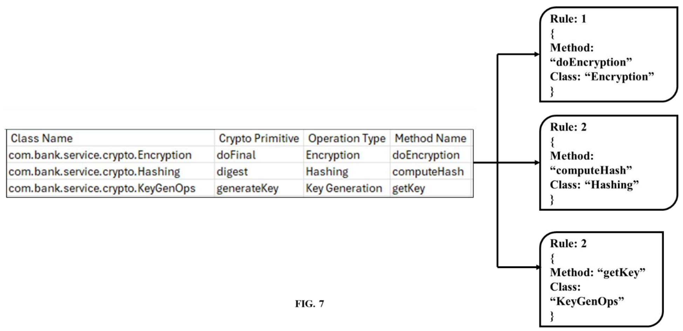

FIG. 7 illustrates a conversion of the crypto inventory report into inventory rules, in conjunction with the method for assessing the agility of an enterprise application, according to some embodiments of the present disclosure. The details of the conversion of the crypto inventory report into rules are explained above.

FIGS. 8A through 8C illustrate one or more structures created by a multi-iterative inventory and clustering process, in conjunction with the method for assessing the agility of an enterprise application, according to some embodiments of the present disclosure. The details of the creation of the one or more structures by the multi-iterative inventory and clustering process rules are explained above.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

Exiting systems fail to provide an automatic way of assessing the application with respect to crypto agility. The Crypto Agility Assessor (CAA) of the present disclosure determines the agility of input application with respect to a crypto library. The CAA of the present disclosure uses a combination of multi-iteration inventory and clustering approach to determine application agility. The application agility is referred to as "how much easy or difficult" is to replace the crypto library with a new library that implements Post Quantum Cryptography (PQC) algorithms. The CAA assigns an agility score (a numeric value) that reflects the agility of input application. The CAA computes the penetration and distribution of the crypto library to compute the agility score.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (300), comprising:
receiving (302), via one or more hardware processors, by an inventory generator, an application containing one or more crypto Application Programming Interfaces (APIs) and a first set of inventory rules;
performing iteratively (304), via the one or more hardware processors, till the length of a call hierarchy corresponding to one or more interfaces of the one or more crypto Application Programming Interfaces (APIs), wherein the one or more interfaces is defined as the application method that invokes the one or more crypto APIs:
(i) generating a crypto inventory report using the received first set of inventory rules;
(ii) generating, by a clustering engine, one or more clusters of the one or more crypto APIs comprised in the generated crypto inventory report, based on a membership of one or more crypto API parameters of a class determined by a slicer;
(iii) extracting, by a rule generator, the one or more interfaces from the one or more clusters of the one or more crypto APIs, to determine the usage of one or more crypto operations;
(iv) converting the extracted one or more interfaces into a second set of inventory rules; and
(v) generating a new crypto inventory report using the converted second set of inventory rules; and
calculating (306), via the one or more hardware processors, an agility score of the application by converting the newly generated crypto inventory report into one or more nodes of at least one of a tree structure or a forest structure based on a number of the one or more clusters generated.

2. The processor implemented method as claimed in claim 1, wherein the slicer determines the membership of the one or more crypto API parameters by:
(i) generating a System Dependence Graph (SDG) by processing the received application by the slicer;
(ii) computing a backward slice for a slicing criterion which is the one or more crypto Application Programming Interfaces (APIs); and
(iii) returning a program slice by the slicer using the computed backward slice, which is further processed by the clustering engine to determine the membership of the one or more crypto API parameters.

3. The processor implemented method as claimed in claim 1, wherein at least one of the tree structure or the forest structure is created based on the number of the one or more clusters generated by performing the following steps:
(i) marking each of the one or more clusters created by the clustering engine in a first iteration as a root node;
(ii) creating a node for each of the one or more clusters created in subsequent iterations;
(iii) attaching the created node as a child node to the root node; and
(iv) creating at least one of the tree structure or the forest structure based on the number of the one or more clusters generated in the first iteration.

4. The processor implemented method as claimed in claim 1, wherein the forest structure created is converted into the tree structure by creating a new node and linking one or more trees of the forest structure to the new node to create a single structure for calculating the agility score of the application.

5. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive, by an inventory generator, an application containing one or more crypto Application Programming Interfaces (APIs) and a first set of inventory rules;
performing iteratively, till the length of a call hierarchy corresponding to one or more interfaces of one or more crypto Application Programming Interfaces (APIs), wherein the one or more interfaces is defined as the application method that invokes the one or more crypto Application Programming Interfaces (APIs):
(i) generating a crypto inventory report using the received first set of inventory rules;
(ii) generating, by a clustering engine, one or more clusters of the one or more crypto Application Programming Interfaces (APIs) comprised in the generated crypto inventory report, based on a membership of one or more crypto API parameters of a class determined by a slicer;
(iii) extracting, by a rule generator, the one or more interfaces from the one or more clusters of the one or more crypto APIs, to determine the usage of one or more crypto operations;
(iv) converting the extracted one or more interfaces into a second set of inventory rules; and
(v) generating a new crypto inventory report using the converted second set of inventory rules; and
calculate an agility score of the application by converting the newly generated crypto inventory report into one or more nodes of at least one of a tree structure or a forest structure based on a number of the one or more clusters generated.

6. The system as claimed in claim 5, wherein the slicer determines the membership of the one or more crypto API parameters by:
(i) generating a System Dependence Graph (SDG) by processing the received application by the slicer;
(ii) computing a backward slice for a slicing criterion which is the one or more crypto Application Programming Interfaces (APIs); and
(iii) returning a program slice by the slicer using the computed backward slice, which is further processed by the clustering engine to determine the membership of the one or more crypto API parameters.

7. The system as claimed in claim 5, wherein at least one of the tree structure or the forest structure is created based on the number of the one or more clusters generated by performing the following steps:
(i) marking each of the one or more clusters created by the clustering engine in a first iteration as a root node;
(ii) creating a node for each of the one or more clusters created in subsequent iterations;
(iii) attaching the created node as a child node to the root node; and
(iv) creating at least one of the tree structure or the forest structure based on the number of the one or more clusters generated in the first iteration.

8. The system as claimed in claim 5, wherein the forest structure created is converted into the tree structure by creating a new node and linking one or more trees of the forest structure to the new node to create a single structure for calculating the agility score of the application.

9. One or more non-transitory machine-readable information storage mediums comprising one or more instructions which when executed by one or more hardware processors cause:
receiving by an inventory generator, an application containing one or more crypto Application Programming Interfaces (APIs) and a first set of inventory rules;
performing iteratively till the length of a call hierarchy corresponding to one or more interfaces of the one or more crypto Application Programming Interfaces (APIs), wherein the one or more interfaces is defined as the application method that invokes the one or more crypto APIs:
(i) generating a crypto inventory report using the received first set of inventory rules;
(ii) generating, by a clustering engine, one or more clusters of the one or more crypto APIs comprised in the generated crypto inventory report, based on a membership of one or more crypto API parameters of a class determined by a slicer;
(iii) extracting, by a rule generator, the one or more interfaces from the one or more clusters of the one or more crypto APIs, to determine the usage of one or more crypto operations;
(iv) converting the extracted one or more interfaces into a second set of inventory rules; and
(v) generating a new crypto inventory report using the converted second set of inventory rules; and
calculating an agility score of the application by converting the newly generated crypto inventory report into one or more nodes of at least one of a tree structure or a forest structure based on a number of the one or more clusters generated.

10. The one or more non-transitory machine-readable information storage mediums as claimed in claim 9, wherein the slicer determines the membership of the one or more crypto API parameters by:
(i) generating a System Dependence Graph (SDG) by processing the received application by the slicer;
(ii) computing a backward slice for a slicing criterion which is the one or more crypto Application Programming Interfaces (APIs); and
(iii) returning a program slice by the slicer using the computed backward slice, which is further processed by the clustering engine to determine the membership of the one or more crypto API parameters.

11. The one or more non-transitory machine-readable information storage mediums as claimed in claim 9, wherein at least one of the tree structure or the forest structure is created based on the number of the one or more clusters generated by performing the following steps:
(i) marking each of the one or more clusters created by the clustering engine in a first iteration as a root node;
(ii) creating a node for each of the one or more clusters created in subsequent iterations;
(iii) attaching the created node as a child node to the root node; and
(iv) creating at least one of the tree structure or the forest structure based on the number of the one or more clusters generated in the first iteration.

12. The one or more non-transitory machine-readable information storage mediums as claimed in claim 9, wherein the forest structure created is converted into the tree structure by creating a new node and linking one or more trees of the forest structure to the new node to create a single structure for calculating the agility score of the application.
